# EUROPÄISCHE PATENTSCHRIFT

(11) **EP 0 780 073 B1**
(45) Veröffentlichungstag und Bekanntmachung des Hinweises auf die Patenterteilung: **14.07.1999**
(21) Anmeldenummer: 96120649.7
(22) Anmeldetag: 20.12.1996
(51) Int. Cl.: A47C 9/00

(54) **Sitzelement**
Seat element
Elément de siège

(30) Priorität: 21.12.1995 DE 19547964
(43) Veröffentlichungstag der Anmeldung: 25.06.1997
(73) Patentinhaber: Fitz, Wolfgang, Dr., 80469 München (DE)
(72) Erfinder: Fitz, Wolfgang, Dr., 80469 München (DE)
(74) Vertreter: Finsterwald, Manfred, Dipl.-Ing., Dipl.-Wirtsch.-Ing.

(56) Entgegenhaltungen:
- EP-A- 0 574 375
- DE-A- 3 324 788
- DE-A- 4 328 679
- DE-U- 29 516 794
- US-A- 4 328 991
- US-A- 4 655 505
- US-A- 5 129 704

## Beschreibung

Die vorliegende Erfindung betrifft ein Sitzelement, wie es beispielsweise in einem Kraftfahrzeug oder als Bürostuhl bzw. als Entspannungssessel verwendet wird, sowie ein Verfahren zur Ansteuerung eines Sitzelements.

Bedingt durch die zunehmende Zahl der im Sitzen ausgeübten Tätigkeiten, wie beispielsweise Schreibtischarbeit oder langandauerndes Fahren in einem Kraftfahrzeug, sind in den letzten Jahren die Beschwerden durch Rückenschmerzen deutlich angestiegen. Hauptursache für das Auftreten dieser Beschwerden sind falsche Sitzelemente, durch die eine falsche Sitzposition bedingt wird.

Doch auch durch orthopädisch einwandfrei geformte Sitze und eine korrekte Sitzhaltung läßt sich das Auftreten von Rückenschmerzen nicht vollständig verhindern. Auch eine korrekte Sitzhaltung kann zu Rückenproblemen führen, wenn diese korrekte Sitzhaltung zu lange starr, d.h. ohne Bewegung der Wirbelsäule eingehalten wird. Da die Bandscheiben nur bei einer Bewegung der Wirbelsäule wechselweise nährstoffreiche Flüssigkeit aufsaugen und nährstoffarme Flüssigkeit abgeben, ist eine ausreichende Versorgung der Bandscheiben bei einer starren Sitzhaltung nicht gegeben. Daher kann auch eine korrekte Sitzhaltung, wenn sie starr über eine lange Zeit eingehalten wird, zu einer Unterversorgung der Bandscheiben und damit zu deren vorzeitiger Abnutzung mit den entsprechenden Beschwerden führen.

Aus der DE 43 286 79 A1 ist ein Arbeitsstuhl bekannt mit einer Sitzschale, an deren Unterseite ein Biegestab angebracht ist, wobei der Biegestab zwar ein Schwenken der Sitzschale in alle Richtungen ermöglicht, jedoch seitliche Bewegungen erschwert und ein automatisches Rückstellen in die Ausgangsstellung bewirkt.

Aus der DE 33 247 88 A1 ist es bekannt, den Sitz eines Bürostuhls mittels motorisch zyklisch betätigbarer Huborgane zu bewegen. Die Möglichkeit einer Programmsteuerung individueller Bewegungsabläufe ist offenbart, jedoch nicht weiter spezifiziert.

Die vorliegende Erfindung stellt sich die Aufgabe, bekannte Sitzelemente dahingehend zu verbessern, daß das Auftreten von Rückenschmerzen auch bei langandauerndem Sitzen noch weiter verringert wird. Insbesondere soll eine Optimierung der Bewegung der Lendenwirbel und damit der Versorgung der Bandscheiben erzielt werden, wobei gleichzeitig erreicht werden soll, daß die Bewegung des Sitzelements als unaufdringlich und angenehm empfunden wird.

Diese Aufgabe wird nach der Erfindung zum einen gelöst durch ein Sitzelement mit einer Basiseinheit und einer Sitzfläche, die eine Vorder- und eine Hinterkante aufweist, wobei wenigstens ein Teil der Sitzfläche gegenüber der Basiseinheit um zumindest eine Hauptachse verkippbar ist, die Hauptachse von der Vorder- zur Hinterkante der Sitzfläche verläuft, die Hauptachse maximal 10 cm von der Sitzfläche beabstandet angeordnet ist, die Kippbewegung des verkippbaren Teils der Sitzfläche auf einen maximalen Kippwinkel begrenzt ist, der maximale Kippwinkel höchstens ± 15° relativ zur Mittelstellung des verkippbaren Teils der Sitzfläche beträgt und der verkippbaren Teil der Sitzfläche zwischen dem maximalen Kippwinkel im wesentlichen frei verkippbar ist (aktive Bewegung ohne Antriebsmittel).

Zum anderen wird die Aufgabe der Erfindung gelöst durch ein Verfahren zur Ansteuerung eines Sitzelements mit einer Basiseinheit und einer Sitzfläche, die eine Vorder- und eine Hinterkante aufweist, wobei wenigstens ein Teil der Sitzfläche gegenüber der Basiseinheit um zumindest eine Hauptachse verkippbar ist, die Kippbewegung des verkippbaren Teils der Sitzfläche auf einen maximalen Kippwinkel α begrenzt ist, der maximale Kippwinkel α höchstens ± 15° relativ zur Mittelstellung des verkippbaren Teils der Sitzfläche beträgt, der verkippbare Teil der Sitzfläche durch eine Antriebseinheit nach einem vorgegebenen, periodischen Bewegungsmuster bewegt wird, die Periodendauer des Bewegungsmusters zwischen 50 Sekunden und 5 Minuten beträgt, und die Hauptachse von der Vorder- zur Hinterkante der Sitzfläche verläuft und maximal 10 cm von der Sitzfläche beabstandet angeordnet ist (passive Bewegung mittels Antriebsmittel).

Durch das erfindungsgemäß ausgebildete Sitzelement wird erreicht, daß die lumbalen Bewegungssegmente der Wirbelsäule während des Sitzens in Bewegung sind, so daß die Bandscheiben ausreichend Nährstoffe aufnehmen können. Durch den Verlauf der Kippachse von der Vorderzur Hinterkante der Sitzfläche wird eine seitliche Kippbewegung des Beckens erreicht, die zum einen als besonders unaufdringlich und angenehm empfunden wird und zum anderen eine optimale Bewegung der Lendenwirbel und damit eine optimale Versorgung der Bandscheiben ermöglicht.

Wesentlich ist dabei, daß zum einen die Kippachse möglichst nahe an den Sitzbeinhöckern einer auf dem Sitzelement sitzenden Person angeordnet ist und zum anderen der maximale Kippwinkel auf einen relativ geringen Wert begrenzt ist.

Durch die genannte Anordnung der Kippachse ist gewährleistet, daß gleichzeitig mit dem Verkippen des Beckens nur eine möglichst geringe oder gar keine seitliche Verschiebung des Beckens stattfindet. Eine solche seitliche Verschiebung würde insbesondere bei einer in einer eventuell vorhandenen Rückenlehne feierten Wirbelsäule eine vermehrte Beckenkippung hervorrufen und somit die tief lumbalen Bewegungssegmente vermehrt bewegen. Dadurch würden Bewegungsausmaße erreicht, die an die passiven maximalen Bewegungsausmaße herangehen und somit zu vermehrten ligamentären Bandspannungen führen würden, die als unangenehm empfunden werden und somit den gewünschten Effekt vermindern oder aufheben.

Die Begrenzung des maximalen Kippwinkels ist für die Erfindung wesentlich, da eine Überstreckung der Wirbelsäule sowie Kapsel- oder Bandüberdehnungen vermieden werden müssen. Die Kippbewegung darf daher nicht zwischen den bei der jeweiligen Person maximal möglichen Kippwinkeln erfolgen, sondern muß in einem physiologisch vernünftigen Bereich liegen. Eine Überdehnung der Wirbelsäule und der entsprechenden Bänder würde eine Erzeugung von Kreuzschmerzen verursachen und somit dem Sinn der Erfindung zuwiderlaufen. Extremstellungen, die zwar noch möglich, jedoch als unangenehm empfunden werden oder auf Dauer sogar schädlich sind, werden durch die Kippwinkelbegrenzung wirksam vermieden.

Ein weiterer Vorteil der Erfindung ist es, daß durch die Verkippung des Beckens lediglich in einem geringen Winkelbereich die dadurch bewirkten Bewegungen der unteren Lendenwirbelsäule durch entsprechende Gegenbewegungen der oberen Lendenwirbelsäule ausgeglichen werden können. Dadurch treten keine oder nur geringfügige Bewegungen der Brustwirbelsäule auf, so daß die Stabilität des Sitzens erhalten bleibt. Dies ist insbesondere bei der Verwendung eines erfindungsgemäß ausgebildeten Sitzelements in einem Kraftfahrzeug wesentlich.

Nach einer vorteilhaften Ausführungsform der Erfindung ist der maximale Kippwinkel einstellbar. Dadurch wird erreicht, daß das Ausmaß der mit dem Kippen verbundenen Bewegungen der Wirbelsäule an die jeweilige Person optimal angepaßt werden können. Insbesondere bei älteren Menschen ist die Beweglichkeit der Wirbelsäule eingeschränkt, so daß bei diesen der maximale Kippwinkel gegenüber dem maximalen Kippwinkel bei jüngeren Menschen verringert werden muß. Andernfalls würden durch die zu starke Biegung der Wirbelsäule Kapsel- oder Bandüberdehnungen auftreten, die zu Rückenschmerzen führen.

Durch die Einstellbarkeit des maximalen Kippwinkels ist somit eine optimale Anpassung des erfindungsgemäß ausgebildeten Sitzelements an die physiologischen Eigenschaften unterschiedlicher Personen möglich.

Nach einer weiteren bevorzugten Ausführungsform der Erfindung sind Begrenzungselemente vorgesehen, die die maximale Kippbewegung des verkippbaren Teils der Sitzfläche begrenzen. Auf diese Weise ist eine besonders einfache und kostengünstige Ausgestaltung der Begrenzung der maximalen Kippbewegung möglich. Insbesondere können die Begrenzungselemente verstellbar sein, um somit eine Verstellbarkeit des maximalen Kippwinkels zu erreichen. Dabei können die Begrenzungselemente so unterschiedlich einstellbar sein, daß der maximale Kippwinkel in der einen Kipprichtung einen unterschiedlichen Betrag im Vergleich zum maximalen Kippwinkel in der entgegengesetzten Kipprichtung aufweist. Die maximalen Kippwinkel können jedoch in beiden Kipprichtungen auch gleich groß sein.

Bevorzugt sind die Begrenzungselemente elastisch zur gedämpften Begrenzung der maximalen Kippbewegung ausgebildet, so daß eine abrupte, die Wirbelsäule belastende Begrenzung der Kippbewegung vermieden wird. Dazu können die Begrenzungselemente beispielsweise aus elastischem Material, wie Gummi oder Kunststoff, oder als Federn ausgebildet oder über elastische Materialien oder Federn gedämpft gelagert sein. Es ist jedoch beispielsweise auch eine magnetische, pneumatische oder hydraulische Dämpfung der Begrenzungselemente möglich.

Nach einer weiteren zweckmäßigen Ausführungsform verläuft die Hauptachse im wesentlichen parallel zum verkippbaren Teil der Sitzfläche. Dadurch ist gewährleistet, daß die Sitzfläche und damit auch das Becken und die Oberschenkel der auf dem Sitz sitzenden Person eine reine Kippbewegung ohne translatorischen Anteil zur Seite ausführen. Falls eine solche translatorische Seitwärtsbewegung in bestimmten Fällen erwünscht ist, kann die Hauptachse auch schräg zum verkippbaren Teil der Sitzfläche angeordnet sein.

Nach einer weiteren vorteilhaften Ausführungsform der Erfindung verläuft die Hauptachse im wesentlichen in der Mitte zwischen Seitenkanten der Sitzfläche. Durch diese symmetrische Anordnung wird erreicht, daß sich die beim Verkippen der Sitzfläche auftretenden Vertikalbewegungen der Sitzhöcker gegenseitig aufheben, so daß die Wirbelsäule und damit die auf dem Sitz sitzende Person praktisch keine resultierende Vertikalbewegung erfährt. Dies ist insbesondere bei der Verwendung als Bürostuhl wesentlich, da eine Vertikalbewegung beispielsweise eine veränderte Armabstützung bedingt und nicht gewollt ist.

Nach einer weiteren bevorzugten Ausführungsform der Erfindung verläuft die Hauptachse im Bereich der Sitzfläche, insbesondere im wesentlichen innerhalb der Sitzfläche. Durch diese Positionierung wird eine Lage der Hauptachse möglichst nahe an den Sitzbeinhöckern erreicht, wodurch eine seitliche Verschiebung des Beckens beim Verkippen der Sitzfläche vermieden bzw. verringert wird. Die Hauptachse kann dabei sowohl unterhalb als auch innerhalb als auch oberhalb der Sitzfläche angeordnet sein. Bei einer Anordnung der Hauptachse oberhalb der Sitzfläche handelt es sich um eine imaginäre Hauptachse, die beispielsweise durch die Lagerung des verkippbaren Teils der Sitzfläche auf einer Federkonstruktion erreichbar ist, welche eine Verkippung um die imaginäre, oberhalb der Sitzfläche angeordnete Hauptachse bewirkt. Anstelle durch eine Federkonstruktion kann die Verkippung beispielsweise auch durch eine mechanische, pneumatische oder hydraulische Anordnung erreicht werden. Selbstverständlich kann bei einer Verkippung um eine imaginäre Achse diese auch unterhalb oder oberhalb der Sitzfläche angeordnet sein.

Entscheidend ist somit nicht, daß die Hauptachse gegenständlich ausgebildet ist, sondern daß der verkippbare Teil der Sitzfläche eine Kippbewegung um eine Hauptachse ausführt, deren reale oder imaginäre Lage sich möglichst in gleicher Höhe wie die Sitzbeinhöcker einer auf dem Sitzelement sitzenden Person befindet.

Bei der Ausführungsform der Erfindung mit aktiver Bewegung des Sitzelements ohne Antriebsmittel ist der verkippbare Teil der Sitzfläche zwischen den maximalen Kippwinkeln im wesentlichen frei, d.h. ohne nennenswerten Widerstand verkippbar. Dadurch wird erreicht, daß durch die sitzende Person selbst das Bekken und somit die lumbale Wirbelsäule ständig geringen Bewegungen ausgesetzt ist, so daß eine starre Sitzhaltung vermieden wird. Diese aktive Bewegung der Sitzfläche kann völlig frei oder auch durch Dämpfungselemente leicht gedämpft sein, so daß ein instabiler Sitzeindruck vermieden wird.

Bei der Ausführungsform der Erfindung mit passiver Bewegung des Sitzelements mittels Antriebsmittel ist die Kippbewegung durch eine Antriebseinheit steuerbar, so daß eine passive Bewegung des Beckens und damit der lumbalen Wirbelsäule einer auf dem Sitzelement sitzenden Person erreicht wird. Auf diese Weise können bestimmte Bewegungsmuster vorgegeben werden, die physiologisch optimal auf die Bedürfnisse der Wirbelsäule ausgerichtet sind. Weiterhin können verschiedene Bewegungsmuster für unterschiedliche Anwendungsbereiche verwendet werden.

Bevorzugt ist die Antriebseinheit abschaltbar ausgebildet, so daß diese in Fällen, in denen eine Bewegung der Sitzfläche nicht gewünscht ist, abgestellt werden kann. Dabei kann die Antriebseinheit sowohl manuell als auch durch eine Automatik abschaltbar sein.

Nach einer weiteren bevorzugten Ausführungsform der Erfindung ist die Antriebseinheit mit einer Steuereinrichtung verbunden, durch die Bewegungsmuster des verkippbaren Teils der Sitzfläche an- und abschaltbar sind. Diese Bewegungsmuster können dabei fest vorgegeben sein und sich insbesondere periodisch wiederholen. Es können aber auch rein zufällig generierte Bewegungsmuster erzeugt werden, um beispielsweise einem Gewöhnungseffekt entgegenzuwirken.

Nach einer weiteren vorteilhaften Ausführungsform der Erfindung ist die Antriebseinheit mit einer Steuereinrichtung verbunden, durch die die Antriebseinheit in bestimmten Zeitintervallen an- und abschaltbar ist. Dadurch können zum einen die bestimmten Bewegungsmuster realisiert werden und zum anderen kann eine Reizüberflutung der auf dem Sitz sitzenden Person verhindert werden. Da der therapeutische Effekt einer Reizstimulierung üblicherweise bei einer andauernden Stimulierung abnimmt, ist somit ein Stillsetzen der Antriebseinheit für einen gewissen Zeitbereich wünschenswert. Bevorzugt sind die Zeitintervalle dabei einstellbar, da sie damit auf die jeweilige Verwendung, insbesondere auf die Person bzw. auf den Einsatz in einem Kraftfahrzug oder als Bürostuhl oder dergleichen optimal angepaßt werden können.

Nach einer weiteren vorteilhaften Ausführungsform ist die Steuereinrichtung mit Sensorelementen verbunden und die Antriebseinheit abhängig von von den Sensorelementen gelieferten Signalen an- und/oder abschaltbar. Dabei wird beispielsweise bei einem Sitz in einem Kraftfahrzeug erreicht, daß abhängig von der jeweiligen Verkehrssituation die Antriebseinheit und damit ein Verkippen der Sitzfläche an- und/oder abgeschaltet werden kann. Beispielsweise kann in bestimmten Gefahrensituationen ein Abschalten der Kippbewegung der Sitzfläche sinnvoll sein, da das Verkippen eine zusätzliche Irritation des Fahrers bewirken kann.

Bevorzugt umfassen die Sensorelemente Beschleunigungssensoren, so daß die Antriebseinheit bei Überschreiten eines vorgegebenen Beschleunigungswertes abschaltbar ist. Dadurch kann beispielsweise vermieden werden, daß bei einem Durchfahren einer Kurve mit überhöhter Geschwindigkeit die Sitzfläche seitlich nach außen abkippt, wodurch eine Irritation des Fahrers und dadurch ein Unfall erfolgen könnte.

Nach einer weiteren vorteilhaften Ausführungsform der Erfindung ist der verkippbare Teil der Sitzfläche in zumindest einer Position, insbesondere in verschiedenen Positionen fixierbar. Dadurch wird erreicht, daß der Sitz in einer bequemen Position eingestellt werden kann, wenn einmal keine Beweglichkeit der Sitzfläche gewünscht wird.

Nach einer bevorzugten Ausführungsform der Erfindung ist der verkippbare Teil der Sitzfläche um eine Vielzahl von Achsen verkippbar, die im wesentlichen in einer Ebene verlaufen und sich in einem Drehpunkt schneiden. Dadurch ist nicht nur eine seitliche Kippbewegung der Sitzfläche, sondern eine Verkippung der Sitzfläche nach vorne und hinten und in jede beliebige dazwischen liegende Richtung möglich. Auf diese Weise können sowohl bei einer passiven als auch bei einer aktiven Bewegung der Sitzfläche komplexe Bewegungsmuster des Beckens und damit der lumbalen Wirbelsäule durchgeführt werden, die eine noch bessere Versorgung der Wirbelsäule ermöglichen. Weiterhin kann durch die Verkippung nach vorne auch die hintere Beckenlage verhindert werden, so daß eine lordotische Einstellung der lumbalen Wirbelsäule in der vorderen und mittleren Beckenposition erreicht wird.

Der Drehpunkt, in dem sich die Achsen schneiden, ist vorzugsweise unterhalb der Sitzbeinhöcker eines das Sitzelement benutzenden Person angeordnet. Diese Ausführungsform trägt besonders wirksam dazu bei, eine vordere bzw. hintere Beckenlage zu vermeiden, bei der beispielsweise ein Rundrücken einen höheren Bandscheibeninnendruck und dadurch dumpfe Ermüdungsschmerzen bewirken. Um unterschiedlichen körperlichen Gegebenheiten von das erfindungsgemäße Sitzelement benutzenden Personen Rechnung tragen zu können und insbesondere zu gewährleisten, daß sich der Drehpunkt immer unterhalb der Sitzbeinhöcker befindet, kann der Abstand zwischen dem Drehpunkt und der am Sitzelement angebrachten Rückenlehne bzw. einer hinteren Beckenkammabstützung einstellbar sein. Die Einstellung wird dabei entweder durch eine Verstellung des Drehpunktes selbst oder durch eine Verstellung der Rückenlehne bzw. der hinteren Beckenkammabstützung erreicht. Durch diese Verstellmöglichkeit kann das erfindungsgemäße Sitzelement an jeglichen Benutzer angepaßt werden. Insbesondere kann durch die Einstellmöglichkeit sichergestellt werden, daß sich der Drehpunkt immer exakt unterhalb der Sitzbeinhöcker befindet.

Durch die beschriebene Ausführungsform wird zudem erreicht, daß die Beckenfassung des Sitzelements in besonders guter Weise an die anatomischen Gegebenheiten beim jeweiligen Benutzer angepaßt werden kann. Ein mit einer verbesserten Anpassung der Beckenfassung verbundener Nachteil einer verringerten Mobilität wird durch die erfindungsgemäße Beweglichkeit des Sitzelements aufgewogen.

Durch die erfindungsgemäße Begrenzung der Kippbewegung nach hinten kann insbesondere in Kombination mit einer optimierten Beckenfassung (z.B. Beckenkammabstützung, Kreuzbeinpelotte, verbesserte Tuberfassung, gute Gesäß- und Oberschenkelfassung) die hintere Beckenlage weitgehend vermieden werden. Die Verkippbarkeit nach vorne ermöglicht besonders gut die vordere Beckenlage und kommt daher Schreibtischtätigkeiten entgegen.

Bevorzugt ist der maximale Kippwinkel für unterschiedliche Achsen, insbesondere auch für die positive und für die negative Kipprichtung unterschiedlich. Bevorzugt sind dabei die unterschiedlichen maximalen Kippwinkel getrennt einstellbar, so daß die maximale Bewegung der lumbalen Wirbelsäule in alle Richtungen für jede Person auf einen physiologisch optimalen Wert begrenzt werden kann.

Bevorzugt kann der maximale seitliche Kippwinkel jeden Wert zwischen 0° und ± 15° relativ zur Mittelstellung des verkippbaren Teils der Sitzfläche annehmen. Nach einer zweckmäßigen Ausführungsform der Erfindung beträgt der maximale seitliche Kippwinkel zwischen ± 3° und ± 13°, insbesondere zwischen ± 3° und ± 7°, bevorzugt zwischen ± 9° und ± 11°. Je nach der Beweglichkeit der Wirbelsäule der auf dem Sitzelement sitzenden Person kann ein anderer, optimaler maximaler seitlicher Kippwinkel eingestellt werden.

Für die Kippbewegung nach vorne kann der maximale Kippwinkel relativ zur Mittelstellung des verkippbaren Teils der Sitzfläche jeden Wert zwischen 0° und 30°, insbesondere zwischen 5° und 25°, bevorzugt zwischen 10° und 20°, vorzugsweise zwischen 13° und 17° annehmen. Für die Kippbewegung nach hinten kann der maximale Kippwinkel relativ zur Mittelstellung des verkippbaren Teils der Sitzfläche jeden Wert zwischen 0° und 15°, insbesondere zwischen 3° und 13°, bevorzugt zwischen 7° und 12°, vorzugsweise zwischen 9° und 11° annehmen.

Nach einer weiteren vorteilhaften Ausführungsform der Erfindung sind die Hauptachse und/oder die weiteren Achsen maximal 8 cm, insbesondere maximal 6 cm, vorzugsweise maximal 4 cm, bevorzugt maximal 2 cm von der Sitzfläche beabstandet angeordnet. Je näher die Achsen an der Sitzfläche bzw. an den Sitzbeinhöckern einer auf dem Sitzelement sitzenden Person angeordnet ist, desto geringer sind die bei einer Kippbewegung der Sitzfläche auftretenden seitlichen Translationsbewegungen des Beckens bzw. die Translationsbewegungen nach vorne oder hinten. Daher ist eine Anordnung der Hauptachse sowie der weiteren Achsen möglichst in Höhe der Sitzbeinhöcker zu bevorzugen.

In bestimmten Fällen kann es jedoch vorteilhaft sein, bei Kippbewegungen nach vorne und/oder hinten Translationsbewegungen des Beckens bewußt zu erzeugen. Beispielsweise kann bei einem Bürostuhl beim Kippen eine Verschiebung des Beckens nach vorne gewünscht sein, da auf diese Weise automatisch die vordere bis mittlere Beckenlage einstellt. Weiterhin kann bei einem Kraftfahrzeugsitz beim Kippen der Sitzfläche eine Verschiebung des Beckens nach hinten gewünscht sein, da dadurch eine zusätzliche Anpressung an die Rückenlehne und eine eventuell vorhandene Lordose- oder Kreuzbeinstütze erfolgt, so daß eine bessere Beckenfassung erreicht wird. In diesen Fällen kann eine Anordnung der Achse für die Kippbewegung nach vorne oder hinten deutlich unterhalb oder oberhalb der Höhe der Sitzhöcker gewählt werden.

Nach einer weiteren zweckmäßigen Ausführungsform der Erfindung ist an der Hinterkante der Sitzfläche eine Rückenlehne vorgesehen. Insbesondere bei der Verwendung eines erfindungsgemäß ausgebildeten Sitzelements in einem Kraftfahrzeug ist eine solche Rückenlehne unabdingbar. Aber auch bei der Verwendung als Bürostuhl oder als Freizeitsessel wird durch eine Rückenlehne eine zusätzliche Stützung der Wirbelsäule erreicht, insbesondere wenn die Rückenlehne mit einer Lordosestütze und/oder einer Kreuzbeinstütze ausgestattet ist. Grundsätzlich ist es jedoch auch möglich, das erfindungsgemäß ausgebildete Sitzelement beispielsweise als Sitzkissen ohne Rückenlehne auszubilden. Auf diese Weise ist eine kompakte Ausbildung eines erfindungsgemäß ausgebildeten Sitzelements möglich, wodurch insbesondere der Transport vereinfacht und die Herstellungskosten verringert werden.

Vorteilhaft ist dabei der Drehpunkt zwischen 5 cm und 30 cm, insbesondere zwischen 8 cm und 20 cm bevorzugt zwischen 11 cm und 16 cm von der Hinterkante der Sitzfläche oder von der Rückenlehne entfernt angeordnet. Dadurch wird erreicht, daß der Drehpunkt im Bereich unmittelbar unterhalb der Sitzbeinhöcker einer auf dem Sitzelement sitzenden Person angeordnet ist, da im statistischen Mittel die Sitzbeinhöcker 13,5 cm vom hinteren Ende der Unterstützungsfläche oder von der dorsalen Begrenzung der Sitzfläche beabstandet sind. Nur bei einer Positionierung des Drehpunktes unterhalb der Sitzbeinhöcker wird eine Vertikalbewegung des Beckens beim Verkippen der Sitzfläche nach vorne oder hinten vermieden.

Im Zusammenhang mit einer gewünschten Verschiebung des Beckens nach vorne oder hinten kann die Drehachse für die Verkippung nach vorne und hinten auch weiter von der Rückenlehne oder der Hinterkante der Sitzfläche beabstandet oder näher an diesen angeordnet sein.

Nach einer weiteren bevorzugten Ausführungsform der Erfindung mit passiver Bewegung des Sitzelements mittels Antriebsmittel umfaßt die Antriebseinheit eine hydraulische Anordnung, wobei diese eine Ansteuereinheit und insbesondere hydraulisch betätigbare Elemente umfaßt, die mit dem verkippbaren Teil der Sitzfläche verbunden und durch die Ansteuereinheit zur Verkippung des verkippbaren Teils der Sitzfläche ansteuerbar sind. Auf diese Weise ist eine passive Bewegung der Sitzfläche und damit des Beckens und der Wirbelsäule einer auf dem Sitzelement sitzenden Person realisierbar. Durch die hydraulisch betätigbaren Elemente, die insbesondere im Bereich der Kanten des verkippbaren Teils der Sitzfläche angelenkt sind, ist eine Kippbewegung des verkippbaren Teils um eine Vielzahl von imaginären Achsen, d.h. um einen imaginären Drehpunkt möglich. Soll lediglich eine seitliche Verkippung des verkippbaren Teils der Sitzfläche möglich sein, so sind eine oder zwei hydraulisch betätigbare Elemente ausreichend. Sollen hingegen Kippbewegungen um eine Vielzahl von Kippachsen möglich sein, so sind drei oder mehr hydraulisch betätigbare Elemente notwendig.

Nach einer weiteren vorteilhaften Ausbildungsform ist im Drehpunkt ein Kugelgelenk vorgesehen. Dadurch kann sehr kostengünstig eine in alle Richtungen verkippbare Sitzfläche realisiert werden. Je nachdem, ob zusätzlich eine Antriebseinheit vorgesehen ist, ist somit eine einfache und kostengünstige Ausbildung einer passiv oder aktiv bewegbaren Sitzfläche möglich.

Nach einer weiteren vorteilhaften Ausführungsform ist zwischen dem verkippbaren Teil der Sitzfläche und der Basiseinheit ein Kugelsegment oder ein Ovaloidsegment angeordnet, auf dem der insbesondere als im wesentlichen ebene Platte ausgebildete verkippbare Teil der Sitzfläche kippbar gelagert ist. Auf diese Weise ist eine besonders einfache und kostengünstige Ausbildung eines erfindungsgemäß ausgebildeten Sitzelements möglich, wobei bei der Verwendung eines Ovaloidsegments durch die unterschiedlichen Kippdurchmesser in verschiedenen Kipprichtungen unterschiedliche Kippradien erreicht werden. Bevorzugt ist dabei der Kippradius für die Kippbewegung nach vorne oder hinten kleiner als der Kippradius für die seitliche Kippbewegung und der Kippradius für die Kippbewegung nach vorne kleiner als der Kippradius nach für die Kippbewegung nach hinten.

Bei einer Verkippung der Platte wandert der Kontaktpunkt zwischen Platte und Ovaloid, d. h. der Drehpunkt der Kippbewegung auf der Oberfläche des Ovaloids. Dabei wandert der Drehpunkt bei einer Kippbewegung entlang eines kleinen Kippradius schneller nach unten als bei einer Kippbewegung entlang eines großen Kippradius. Auf diese Weise kann abhängig von der Kipprichtung eine Vertikalverschiebung des Drehpunktes gewählt werden, die zu einer Vergrößerung des Abstandes zwischen Drehpunkt und Sitzfläche und dadurch zu einer horizontalen Verschiebung des Beckens führt. Eine solche horizontale Verschiebung nach vorne kann insbesondere bei einem Bürostuhl und eine horizontale Verschiebung nach hinten bei einem Kraftfahrzeugsitz erwünscht sein.

Weitere vorteilhafte Ausführungsformen eines erfindungsgemäß ausgebildeten Sitzelements sowie eines erfindungsgemäß ausgebildeten Sitzmöbels und eines erfindungsgemäßen Verfahrens zur Ansteuerung eines Sitzelements oder eines Sitzmöbels sind in den Unteransprüchen angegeben.

Die Erfindung wird nachfolgend anhand mehrerer Ausführungsbeispiele unter Bezugnahme auf die Zeichnungen näher beschrieben; in diesen zeigen:
- Fig. 1: eine Seitenansicht auf einen erfindungsgemäß ausgebildeten Kraftfahrzeugsitz mit einer schematischen Darstellung des verkippbaren Teils der Sitzfläche und des Beckens einer auf dem Sitz sitzenden Person,
- Fig. 2: eine Vorderansicht des Kraftfahrzeugsitzes nach Fig. 1, wobei von der in Fig. 1 dargestellten Person lediglich das Becken und der untere Bereich der Wirbelsäule dargestellt sind,
- Fig. 3: eine Vorderansicht eines Fahrradsitzes, bei der das Becken gegenüber einer gestrichelt dargestellten Mittelposition seitlich verkippt ist,
- Fig. 4: eine Seitenansicht des Fahrradsitzes nach Fig. 3, wobei das Becken gegenüber einer gestrichelt dargestellten Mittelposition nach vorne verkippt ist,
- Fig. 5: eine weitere Ausführungsform eines erfindungsgemäß ausgebildeten Sitzelements,
- Fig. 6: eine schematische Darstellung einer ersten Variante einer erfindungsgemäßen Lagerung des verkippbaren Teils einer Sitzfläche,
- Fig. 7: eine schematische Darstellung einer zweiten Variante einer erfindungsgemäßen Lagerung des verkippbaren Teils einer Sitzfläche,
- Fig. 8: eine schematische Darstellung einer dritten Variante einer erfindungsgemäß ausgebildeten Lagerung des verkippbaren Teil einer Sitzfläche in der Vorderansicht und
- Fig. 9: die erfindungsgemäß ausgebildete Lagerung nach Fig. 8 in der Seitenansicht.

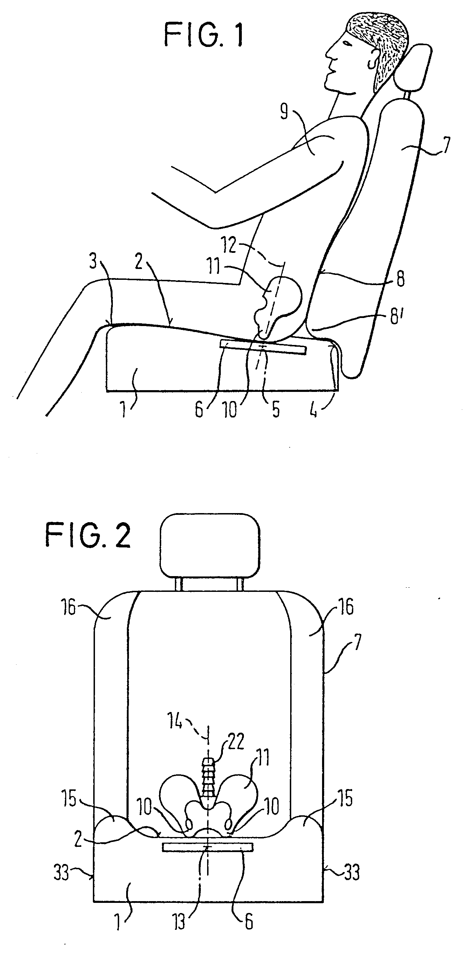

Fig. 1 zeigt einen Kraftfahrzeugsitz mit einer Basiseinheit 1 und einer Sitzfläche 2, die eine Vorderkante 3 und eine Hinterkante 4 aufweist. Zwischen der Vorderkante 3 und der Hinterkante 4 umfaßt die Sitzfläche 2 eine um eine Achse 5 verkippbar gelagerte Platte 6.

Der Kfz-Sitz umfaßt weiterhin eine Rückenlehne 7, die im Bereich der Hinterkante 4 der Sitzfläche 2 angeordnet ist und an ihrer Vorderseite eine Lordosestütze 8 sowie eine Kreuzbeinstütze 8' aufweist.

Auf dem Sitz ist eine Person 9 sitzend angeordnet, die in einer typischen Fahrposition dargestellt ist. Die Platte 6 ist mit der Achse 5 so innerhalb der Sitzfläche 2 positioniert, daß die Achse 5 unmittelbar unterhalb der Sitzbeinhöcker 10 des Beckens 11 der Person 9 angeordnet ist. Weiterhin ist in Fig. 1 eine gestrichelt gezeichnete Linie 12 eingezeichnet, welche die Stellung des Beckens 11 in der in Fig. 1 dargestellten Mittellage der Platte 6 bezüglich einer Verkippung nach vorne oder hinten um die Achse 5 kennzeichnet.

In der in Fig. 2 dargestellten Vorderansicht des Sitzes nach Fig. 1 ist zu erkennen, daß die Platte 6 außer um die Achse 5 noch um eine Hauptachse 13 verkippbar ist, die mittig zwischen den Seitenkanten 33 des Sitzes angeordnet ist. Um diese Hauptachse 13 ist eine seitliche Verkippung des Beckens 11 möglich, während um die in Fig. 1 dargestellte Achse 5 eine Verkippung des Beckens 11 nach vorne oder hinten erfolgt.

Entsprechend der Linie 12 nach Fig. 1 ist in Fig. 2 eine Linie 14 eingezeichnet, welche die Stellung des Beckens 11 in der in Fig. 2 dargestellten Mittellage bezüglich der seitlichen Verkippung um die Hauptachse 13 kennzeichnet. In dieser Mittellage weist die lumbale Wirbelsäule 22 der Person 9 im wesentlichen keine seitliche Verbiegung auf.

Aus Fig. 2 ist weiterhin zu erkennen, daß sowohl die Sitzfläche 2 als auch die Rückenlehne 7 Abstützelemente 15, 16 in Form von Materialverstärkungen umfassen, die eine seitliche Abstützung der Person 9 gewährleisten.

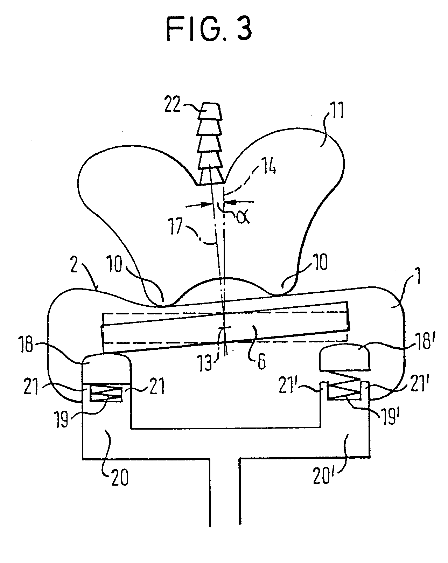

In der Vorderansicht eines Fahrradsitzes nach Fig. 3 ist das Becken 11 gegenüber der die Mittelstellung kennzeichnenden Linie 14 seitlich verkippt dargestellt. Die verkippte Stellung des Beckens 11 ist durch eine strichpunktierte Linie 17 gekennzeichnet, so daß der Kippwinkel α dem von den Linien 14 und 17 eingeschlossenem Winkel entspricht.

Auch die Platte 6 ist gegenüber ihrer gestrichelt dargestellten Mittelstellung um die Hauptachse 13 um den Winkel α verkippt dargestellt. Das linke Ende der Platte 6 liegt auf einem Pufferelement 18 auf, das über eine Feder 19 an einem Trägerelement 20 gedämpft abgestützt ist. Das Trägerelement 20 umfaßt zwei Anschläge 21, an denen das Pufferelement 18 bei zusammengedrückter Feder 19 zur Anlage kommt, wie es in der linken Hälfte von Fig. 3 dargestellt ist, so daß der in Fig. 3 dargestellte Winkel α dem maximalen seitlichen Kippwinkel entspricht.

In der rechten Hälfte von Fig. 3 sind ein entsprechendes Pufferelement 18', eine Feder 19' sowie ein Trägerelement 20' mit Anschlagen 21' dargestellt, die zur Kippbegrenzung der Platte 6 bei einer seitlichen Verkippung im Uhrzeigersinn dienen.

Wie aus Fig. 3 zu erkennen ist, wird durch die Verkippung des Beckens 11 die lumbale Wirbelsäule 22 gekrümmt, so daß die entsprechenden Bandscheiben mit Nährstoffen versorgt werden.

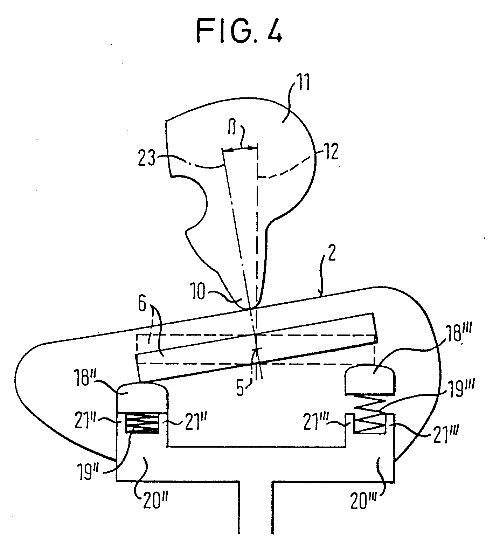

In Fig. 4 ist die Platte 6 gegenüber einer gestrichelt dargestellten Mittelstellung um einen Winkel β nach vorne verkippt. Entsprechend ist auch das Becken 11 gegenüber der Mittelstellung um den Winkel β nach vorne verkippt, wobei die Stellung des Beckens 11 durch die strichpunktierte Linie 23 gekennzeichnet ist.

Wie in Fig. 3 sind auch in Fig. 4 Elemente zum Begrenzen des maximalen Kippwinkels vorgesehen, welche Pufferelemente 18'', 18''', Federn 19'', 19''' sowie Trägerelemente 20'', 20''' mit Anschlägen 21'', 21''' umfassen.

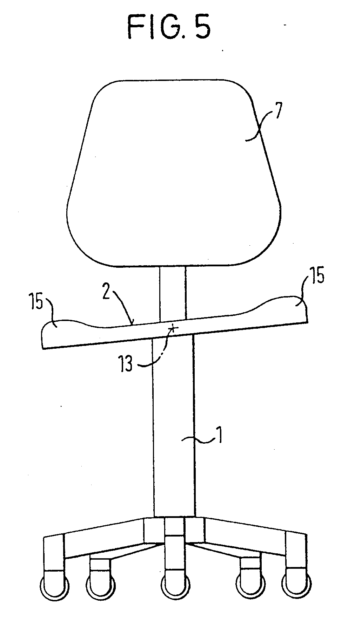

In Fig. 5 ist ein als Bürostuhl ausgebildetes erfindungsgemäßes Sitzelement dargestellt. Bei diesem Bürostuhl ist im Gegensatz zu der Ausführungsform nach den Fig. 1 bis 4 nicht nur ein Teil der Sitzfläche 2, sondern die gesamte Sitzfläche 2 um die Hauptachse 13 verkippbar.

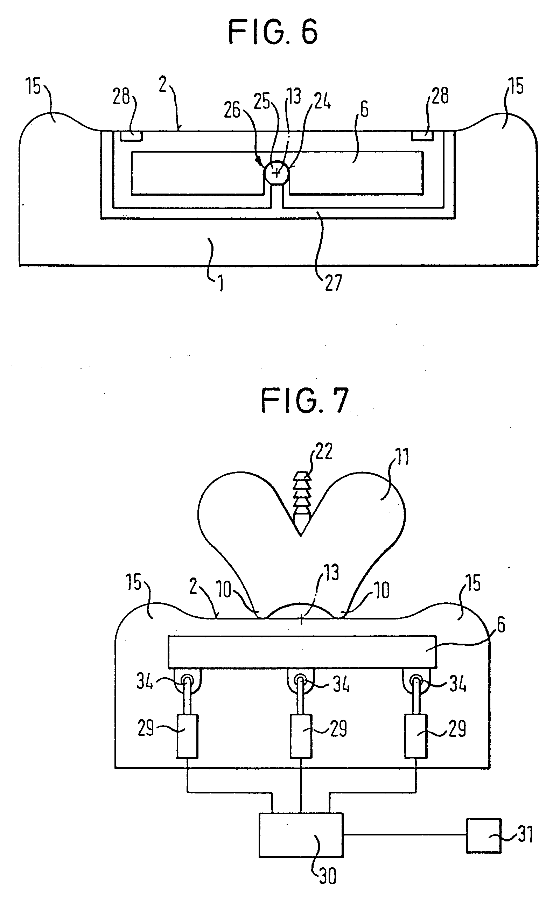

Fig. 6 zeigt eine spezielle Lagerung der Platte 6 eines erfindungsgemäß ausgebildeten Sitzelements. Die Platte 6 enthält eine Ausnehmung 24 mit im wesentlichen U-förmigem Querschnitt, die zusammen mit einer in die Ausnehmung 24 eingesetzten Kugel 25 ein Kugelgelenk 26 bildet.

Die Kugel 25 ist über eine Halterung 27 mit der Sitzfläche 2 verbunden. Dadurch bleibt auch bei einer Bewegung der Sitzfläche 2 nach unten durch das Gewicht einer auf dem Sitz sitzenden Person der Abstand zwischen der Oberseite der Sitzfläche 2 und dem Kugelgelenk 26 im wesentlichen konstant, da sich das Kugelgelenk 26 zusammen mit der Sitzfläche 2 nach unten bewegt.

Weiterhin sind zwei Begrenzungselemente 28 an der Sitzfläche 2 vorgesehen, welche den maximalen Kippwinkel der Platte 6 begrenzen. Durch die Anordnung der Begrenzungselemente 28 an der Sitzfläche 2 ist gewährleistet, daß bei einer Bewegung der Sitzfläche 2 nach unten die maximalen Kippwinkel unverändert bleiben.

Bei der in Fig. 7 gezeigten erfindungsgemäßen Lagerung der Platte 6 ist diese über Gelenke 34 an drei Stellen mit hydraulisch gesteuerten Teleskopelementen 29 verbunden. Die hydraulisch gesteuerten Teleskopelemente 29 sind über eine Ansteuereinheit 30 steuerbar, welche mit einem Sensorelement 31 verbunden ist.

Die Platte 6 ist über die Ansteuereinheit 30 und die Teleskopelemente 29 so bewegbar, daß Kippbewegungen um eine imaginäre Hauptachse 13 realisierbar sind. Die imaginäre Hauptachse 13 ist dabei an der Oberseite der Sitzfläche 2 in Höhe der Sitzbeinhöcker 10 senkrecht unterhalb der lumbalen Wirbelsäule 22 angeordnet.

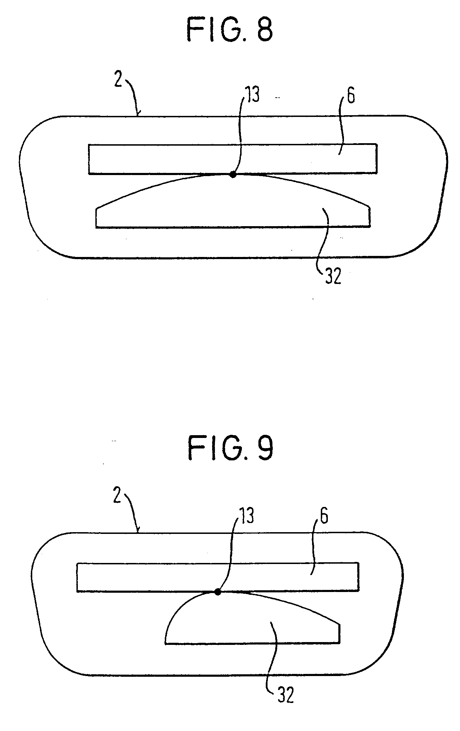

Bei dem in den Fig. 8 und 9 dargestellten Ausführungsbeispiel der Erfindung ist die Platte 6 auf der konvexen Oberfläche eines Ovaloidsegments 32 verkippbar gelagert. Dabei zeigt Fig. 8 die Vorderansicht, aus der erkennbar ist, daß die Kippradien für die seitliche Verkippung gleich groß gewählt sind. Dadurch sind die seitlichen Kippbewegungen in beiden Richtungen in einem kleinen begrenzten, jedoch gleichen Ausmaß möglich. Weiterhin ist zu erkennen, daß der Kippradius für die seitliche Verkippung groß gegenüber dem Kippradius für die Verkippung nach vorne oder hinten (Fig. 9) ist. Damit wird den unterschiedlichen Bewegungsausmaßen der distalen lumbalen Wirbelsäule nach der Seite und nach vorne oder hinten Rechnung getragen.

Fig. 9 zeigt die Seitenansicht des Ausführungsbeispiels nach Fig. 8. Da der Kippradius für die Kippbewegung nach vorne (in Fig. 9 links dargestellt) kleiner ist als der Kippradius für die Kippbewegung nach hinten (in Fig. 9 rechts dargestellt), sind nach vorne größere Kippbewegungen möglich als nach hinten. Damit wird den unterschiedlichen Bewegungsausmaßen der distalen lumbalen Wirbelsäule nach vorne und nach hinten Rechnung getragen.

Im folgenden wird die Funktionsweise eines erfindungsgemäß ausgebildeten Sitzelements sowie das erfindungsgemäße Verfahren zur Ansteuerung eines solchen Sitzelements näher beschrieben:

Durch die doppelte Lagerung der Platte 6 sowohl um die Achse 5 als auch um die Hauptachse 13 bildet der Schnittpunkt der Achsen 5 und 13 einen Drehpunkt für die Platte 6, so daß diese um diesen Drehpunkt in beliebige Richtungen verkippbar ist.

Die Position des Drehpunktes ist so gewählt ist, daß er zum einen bezüglich der Seitenansicht nach Fig. 1 exakt vertikal unterhalb der Sitzbeinhöcker 10 und zum anderen bezüglich der Vorderansicht nach Fig. 2 mittig zwischen den Seitenkanten 33 der Sitzfläche und damit mittig zwischen den Sitzbeinhöckern 10 angeordnet ist. Darüber hinaus liegt der Drehpunkt so nahe wie möglich an der Oberseite der Sitzfläche 2 und damit fast in Höhe der Sitzbeinhöcker 10, so daß sowohl eine seitliche Verkippung als auch eine Verkippung der Platte 6 nach vorne oder hinten praktisch ausschließlich eine seitliche Verkippung des Beckens 11 bzw. eine Verkippung des Beckens 11 nach vorne oder hinten bewirken, ohne daß eine Translationsbewegung des Beckens 11 erfolgt.

Da die Platte 6 im wesentlichen frei um den Drehpunkt 5, 13 verkippbar ist, führt das Becken 11 ständig geringe Kippbewegungen aus, wodurch die lumbale Wirbelsäule 22 sowohl seitlich als auch nach vorne und hinten leicht gekrümmt wird, wie es Fig. 3 zu entnehmen ist. Die Kippbewegungen sind dabei so geringfügig, daß die Krümmung der unteren lumbalen Wirbelsäule durch eine gegenläufige Bewegung der oberen lumbalen Wirbelsäule ausgeglichen wird, so daß die thorakale Wirbelsäule praktisch nicht gekrümmt wird. Dadurch bleibt die Stabilität des Sitzens erhalten, was insbesondere bei der Verwendung als Kraftfahrzeugsitz wesentlich ist.

Durch die ständige Bewegung des Beckens 11 und der lumbalen Wirbelsäule 22 wird zum einen eine Versorgung der Wirbelsäulenelemente gewährleistet und zum anderen eine Verspannung durch starres Sitzen vermieden. Dabei ist wesentlich, daß die maximalen Kippwinkel α und β der Platte 6 und damit des Beckens 11 durch die Pufferelemente 18 begrenzt werden, so daß eine Überdehnung verhindert wird. Wie den Fig. 3 und 4 zu entnehmen ist, treten die freien Enden der Platte 6 bei einer Verkippung mit den Pufferelementen 18-18''' in Kontakt, welche durch die weiterführende Verkippung gegen die Federkraft der Federn 19-19''' gedrückt werden, bis sie an den Anschlägen 21-21''' der Trägerelemente 20-20''' zur Anlage kommen. Auf diese Weise werden die maximalen Kippbewegungen der Platte 6 wirksam begrenzt.

Dabei ist es vorteilhaft, wenn die maximalen Kippwinkel α und β beispielsweise durch eine Einstellbarkeit der Pufferelemente 18-18''' individuell für die auf den Sitz sitzende Person einstellbar sind, da auf diese Weise abhängig von den jeweiligen physiologischen Eigenschaften der Person optimale Kippwinkel α und β gewählt werden können. Dabei können die Begrenzungselemente so eingestellt werden, daß die maximalen Kippwinkel für vorne, hinten, links und rechts unterschiedliche Werte aufweisen, um somit eine noch genauere Einstellung auf die jeweilige Person zu ermöglichen.

Anstelle einer aktiven Bewegung durch die auf dem Sitz sitzende Person selbst kann der verkippbare Teil 6 der Sitzfläche 2 bzw. die gesamte Sitzfläche 2 auch durch eine Antriebseinheit 30, wie sie in Fig. 7 dargestellt ist, bewegt werden. Auf diese Weise kann beispielsweise durch die in Fig. 7 dargestellten hydraulischen Teleskopelemente 29 eine Verkippung der Platte 6 um den imaginären Drehpunkt 13 erreicht werden. Da der Drehpunkt 13 in diesem Fall nicht an die Position der Platte 6 gebunden ist, sondern durch eine entsprechende Ansteuerung der hydraulischen Teleskopelemente 29 an eine beliebige Stelle gelegt werden kann, ist auf diese Weise die optimale Positionierung dieses Drehpunktes 13 mittig zwischen den Sitzbeinhöckern 10 und in Höhe der Sitzbeinhöcker 10 möglich.

Weiterhin können durch die Antriebseinheit 30 vorgegebene Bewegungsmuster auf die Platte 6 übertragen werden, welche eine optimale physiologische Bewegung des Beckens 11 und der Wirbelsäule 22 bewirken.

Durch das Sensorelement 31 können beispielsweise Verzögerungswerte eines Kraftfahrzeugs aufgenommen werden, so daß die Ansteuereinheit 30 beispielsweise bei einem Durchfahren von Kurven mit hoher Geschwindigkeit die Bewegung der Platte 6 stillsetzt, um eine Irritation des Fahrers zu verhindern.

Darüber hinaus kann bei einer durch das Sensorelement 31 festgestellten Vollbremsung die Platte 6 an ihrer Vorderseite so nach oben verkippt werden, daß die Vorderkante der Sitzfläche 2 nach oben bewegt wird, so daß einem Hindurchrutschen der auf dem Sitz sitzenden Person unter dem Sicherheitsgurt hindurch entgegengewirkt wird. Grundsätzlich kann es sinnvoll sein, daß beim Überschreiten bestimmter Beschleunigungswerte der verkippbare Teil der Sitzfläche entgegen der Fliehkraft verkippt wird.

Bei der Ausführungsform nach den Fig. 8 und 9 wandert der Drehpunkt 13 bei einer Kippbewegung der Platte 6 entlang der Oberfläche des Ovaloidsegments 32. Dabei tritt insbesondere bei der Verkippung nach vorne (nach links in Fig. 9) eine relativ starke Vertikalverschiebung des Drehpunktes 13 nach unten auf, welche zusätzlich zum Verkippen des Beckens eine Verschiebung nach vorne bewirkt. Damit kann beispielsweise bei einem Bürostuhl die automatische Einstellung der vorderen oder zumindest der mittleren Beckenlage erreicht werden.

## Patentansprüche

1. Sitzelement mit einer Basiseinheit (1) und einer Sitzfläche (2), die eine Vorder- (3) und eine Hinterkante (4) aufweist, wobei wenigstens ein Teil (6) der Sitzfläche (2) gegenüber der Basiseinheit (1) um zumindest eine Hauptachse (13) verkippbar ist, die Hauptachse (13) von der Vorder- (3) zur Hinterkante (4) der Sitzfläche (2) verläuft, die Hauptachse (13) maximal 10 cm von der Sitzfläche (2) beabstandet angeordnet ist, die Kippbewegung des verkippbaren Teils (6) der Sitzfläche (2) auf einen maximalen Kippwinkel α begrenzt ist und der maximale Kippwinkel α höchstens ± 15° relativ zur Mittelstellung des verkippbaren Teils (6) der Sitzfläche (2) beträgt,
dadurch **gekennzeichnet,**
daß der verkippbare Teil (6) der Sitzfläche (2) zwischen dem maximalen Kippwinkel α im wesentlichen frei verkippbar ist.

2. Sitzelement nach Anspruch 1,
dadurch **gekennzeichnet,**
daß Begrenzungselemente (18, 19, 20, 21, 28) vorgesehen sind, die die maximale Kippbewegung des verkippbaren Teils (6) der Sitzfläche (2) begrenzen.

3. Sitzelement nach Anspruch 2,
dadurch **gekennzeichnet,**
daß die Begrenzungselemente (18, 19, 20, 21, 28) elastisch zur gedämpften Begrenzung der maximalen Kippbewegung ausgebildet sind.

4. Sitzelement nach einem der vorhergehenden Ansprüche,
dadurch **gekennzeichnet,**
daß die Beträge der maximalen Kippwinkel (α) in positiver und in negativer Kipprichtung gleich groß sind.

5. Sitzelement nach einem der vorhergehenden Ansprüche,
dadurch **gekennzeichnet,**
daß die Hauptachse (13) im wesentlichen parallel zum verkippbaren Teil (6) der Sitzfläche (2) verläuft.

6. Sitzelement nach einem der vorhergehenden Ansprüche,
dadurch **gekennzeichnet,**
daß die Hauptachse (13) im wesentlichen in der Mitte zwischen Seitenkanten (33) der Sitzfläche (2) verläuft.

7. Sitzelement nach einem der vorhergehenden Ansprüche,
dadurch **gekennzeichnet,**
daß der verkippbare Teil (6) der Sitzfläche (2) um eine weitere Achse (5) oder um eine Vielzahl von Achsen (5, 13) verkippbar ist.

8. Sitzelement nach Anspruch 7,
dadurch **gekennzeichnet,**
daß die weitere Achse (5) bzw. die Vielzahl von Achsen (5, 13) sich mit der Hauptachse (13) in einem Drehpunkt schneiden.

9. Sitzelement nach Anspruch 8,
dadurch **gekennzeichnet,**
daß der Drehpunkt unterhalb der Sitzbeinhöcker einer das Sitzelement benutzenden Person angeordnet ist.

10. Sitzelement nach einem der Ansprüche 7 bis 9,
dadurch **gekennzeichnet,**
daß die Kippbewegung des verkippbaren Teils (6) der Sitzfläche (2) und die weitere Achse bzw. um die Vielzahl von Achsen (5) auf einen maximalen Kippwinkel (β) begrenzt ist.

11. Sitzelement nach einem der vorhergehenden Ansprüche,
dadurch **gekennzeichnet,**
daß der maximale seitliche Kippwinkel (α) zwischen ± 0° und ± 15° beträgt, und/oder
daß der maximale Kippwinkel (β) nach vorne zwischen 0° und 30° beträgt, und/oder
daß der maximale Kippwinkel (β) nach hinten zwischen 0° und 15° beträgt.

12. Sitzelement nach einem der vorhergehenden Ansprüche,
dadurch **gekennzeichnet,**
daß die Hauptachse (13) und/oder die weiteren Achsen (5, 13) maximal 8 cm von der Sitzfläche (2) beabstandet angeordnet ist.

13. Sitzelement nach einen der vorhergehenden Ansprüche,
dadurch **gekennzeichnet,**
daß an oder in der Sitzfläche (2) eine Kreuzbeinstütze (8') vorgesehen ist, und/oder daß in der Sitzfläche (2) eine verbesserte Sitzbeinhöckerfassung vorgesehen ist.

14. Sitzelement nach Anspruch 8,
dadurch **gekennzeichnet,**
daß im Drehpunkt (5, 13) ein Kugelgelenk (26) vorgesehen ist.

15. Sitzelement nach einem der vorhergehenden Ansprüche,
dadurch **gekennzeichnet,**
daß zwischen dem verkippbaren Teil (6) der Sitzfläche (2) und der Basiseinheit (1) ein Kugelsegment (32) oder ein Ovaloidsegment (32) angeordnet ist, auf dem der verkippbare Teil (6) der Sitzfläche (2) kippbar gelagert ist.

16. Sitzmöbel, insbesondere Bürostuhl, Sitzkissen oder Autositz,
**gekennzeichnet**
durch die Merkmale eines oder mehrerer der vorhergehenden Ansprüche.

17. Verfahren zur Ansteuerung eines Sitzelements mit einer Basiseinheit (1) und einer Sitzfläche (2), die eine Vorder- (3) und eine Hinterkante (4) aufweist,
wobei wenigstens ein Teil (6) der Sitzfläche (2) gegenüber der Basiseinheit (1) um zumindest eine Hauptachse (13) verkippbar ist, die Kippbewegung des verkippbaren Teils (6) der Sitzfläche (2) auf einen maximalen Kippwinkel α begrenzt ist, der maximale Kippwinkel α höchstens ± 15° relativ zur Mittelstellung des verkippbaren Teils (6) der Sitzfläche (2) beträgt, der verkippbare Teil (6) der Sitzfläche (2) durch eine Antriebseinheit (30) nach einem vorgegebenen, periodischen Bewegungsmuster bewegt wird, die Periodendauer des Bewegungsmusters zwischen 50 Sekunden und 5 Minuten beträgt, und die Hauptachse (13) von der Vorder- (3) zur Hinterkante (4) der Sitzfläche (2) verläuft und maximal 10 cm von der Sitzfläche (2) beabstandet angeordnet ist.

18. Verfahren nach Anspruch 17,
dadurch **gekennzeichnet,**
daß die Antriebseinheit (30) abhängig von der jeweiligen Verkehrssituation an- oder abgeschaltet wird.

19. Verfahren nach einem der Ansprüche 17 oder 18,
dadurch **gekennzeichnet,**
daß die Antriebseinheit (29, 30) mit einer Steuereinrichtung (30) verbunden ist, durch die die Bewegungsmuster des verkippbaren Teils (6) der Sitzfläche (2) an- und abgeschaltet werden, wobei die Steuereinrichtung (30) mit Sensorelementen (31), insbesondere mit Beschleunigungssensoren, verbunden ist und die Antriebseinheit abhängig von von den Sensorelementen (31) gelieferten Signalen an- und/oder abgeschaltet wird.

20. Verfahren nach einem der Ansprüche 17 bis 19,
dadurch **gekennzeichnet,**
daß der verkippbare Teil (6) der Sitzfläche (2) durch eine mechanische und/oder hydraulische Anordnung (29, 30) bewegt wird, wobei die hydraulische Anordnung insbesondere drei hydraulisch betätigbare Elemente (29) umfaßt, die durch eine Ansteuereinheit (30) zur Verkippung des verkippbaren Teils (6) der Sitzfläche (2) angesteuert werden.

## Claims

1. Seat element comprising a basic unit (1) and a seat surface (2) having a front edge (3) and a rear edge (4), wherein at least a part (6) of the seat surface (2) can be tilted relative to the basic unit (1) about at least one main axis (13), wherein the main axis (13) extends from the front edge (3) to the rear edge (4) of the seat surface (2), wherein the main axis (13) is arranged at a maximum spacing of 10 cm from the seat surface (2), wherein the tilting movement of the tiltable part (6) of the seat surface (2) is restricted to a maximum tilt angle (α), and wherein the maximum tilt angle (α) amounts to at most ± 15° relative to the central position of the tiltable part (6) of the seat surface (2), characterized in that the tiltable part (6) of the seat surface (2) is substantially freely tiltable between the maximum tilt angle (α).

2. Seat element in accordance with claim 1, characterized in that restriction elements (18, 19, 20, 21, 28) are provided which restrict the maximum tilting movement of the tiltable part (6) of the seat surface (2).

3. Seat element in accordance with claim 2, characterized in that the restriction elements (18, 19, 20, 21, 28) are elastically formed for the damped restriction of the maximum tilting movement.

4. Seat element in accordance with one of the preceding claims, characterized in that the amounts of the maximum tilt angle (α) in the positive direction of tilting and in the negative direction of tilting are of the same size.

5. Seat element in accordance with one of the preceding claims, characterized in that the main axis (13) extends substantially parallel to the tiltable part (6) of the seat surface (2).

6. Seat element in accordance with one of the preceding claims, characterized in that the main axis (13) extends substantially at the center between side edges (33) of the seat surface (2).

7. Seat element in accordance with one of the preceding claims, characterized in that the tiltable part (6) of the seat surface (2) can be tilted about a further axis (5) or about a plurality of axes (5, 13).

8. Seat element in accordance with claim 7, characterized in that the further axis (5) or the plurality of axes (5, 13), intersect with the main axis (13) at a point of rotation.

9. Seat element in accordance with claim 8, characterized in that the point of rotation is arranged beneath the ischial tuberosities of a person using the seat element.

10. Seat element in accordance with one of the claims 7 to 9, characterized in that the tilting movement of the tiltable part (6) of the seat surface (2) about the further axis, or about the plurality of axes (5), is restricted to a maximum tilting angle (β).

11. Seat element in accordance with one of the preceding claims, characterized in that the maximum lateral tilt angle (α) amounts to between ± 0° and ± 15°, and/or in that the maximum tilt angle (β) in the forward direction amounts to between 0° and 30, and/or the maximum tilt angle (β) to the front amounts to between 0° anc 30°, and/or in that the maximum tilt angle (β) to the rear amounts to between 0° and 15°.

12. Seat element in accordance with one of the preceding claims, characterized in that the main axis (13) and/or the further axes (5, 13) is arranged at a maximum of 8 cm from the seat surface (2).

13. Seat element in accordance with one of the preceding claims, characterized in that a sacral support (8') is provided at or in the seat surface (2), and/or in that an improved frame for the ischial tuberosities is provided in the seat surface (2).

14. Seat element in accordance with claim 8, characterized in that a ball joint (26) is provided at the point of rotation (5, 13).

15. Seat element in accordance with one of the preceding claims, characterized in that a ball segment (32) or an ovaloid segment (32) is arranged between the tiltable part (6) of the seat surface (2) and the basic unit (1), with the tiltable part (6) of the seat surface (2) being tiltably journalled on the segment.

16. Seating furniture, in particular office stool, seat cushion or car seat, characterized by the features of claim 1.

17. Method of controlling a seat element with a basic unit (1) and a seat surface (2) having a front edge (3) and a rear edge (4), wherein at least a part (6) of the seat surface (2) can be tilted relative to the basic unit (1) about at least one main axis (13), wherein the tilting movement of the tiltable part (6) of the seat surface (2) is restricted to a maximum tilt angle (α), wherein the maximum tilt angle (α) amounts to at most ± 15° relative to the central position of the tiltable part (6) of the seat surface (2), wherein the tiltable part (6) of the seat surface (2) can be moved in accordance with a predetermined, periodic pattern of movement, by a drive unit (30), wherein the periodic duration of the movement lies between 50 s and 5 min, and wherein the main axis (13) extends from the front edge (3) to the rear edge (4) of the seat surface (2) and is arranged spaced at a maximum of 10 cm from the seat surface (2).

18. Method in accordance with claim 17, characterized in that the drive unit (30) can be switched on or off depending on the respective traffic situation.

19. Method in accordance with one of the claims 17 or 18, characterized in that the drive unit (29, 30) is connected to a control device (30), by which the pattern of movement of the tiltable part (6) of the seat surface (2) can be switched on and off, with the control device (30) being connected to sensor elements (31), in particular to acceleration sensors, and with the drive unit being switched on and/or off in dependence on the signals delivered by the sensor elements (31).

20. Method in accordance with one of the claims 17 to 19, characterized in that the tiltable part (6) of the seat surface (2) is moved by a mechanical and/or hydraulic arrangement (29, 30), with the hydraulic arrangement in particular including three hydraulically actuatable elements (29), which can be controlled by a control unit (30) for the tilting of the tiltable part (6) of the seat surface (2).

## Revendications

1. Elément formant siège avec une unité de base (1) et une surface de siège (2) qui présente un bord avant (3) et un bord arrière (4), où au moins une partie (6) de la surface de siège (2) peut être basculée par rapport à l'unité de base (1) autour d'au moins un axe principal (13), l'axe principal (13) s'étendant du bord avant (3) au bord arrière (4) de la surface de siège (2), l'axe principal (13) étant espacé au maximum de 10 cm de la surface de siège (2), le mouvement de basculement de la partie basculante (6) de la surface de siège (2) est limité à un angle de basculement maximal α, et l'angle de basculement maximal a représentant au maximum ± 15° relativement à la position médiane de la partie basculante (6) de la surface de siège (2),
**caractérisé en ce**
que la partie basculante (6) de la surface de siège (12) peut basculer essentiellement librement entre l'angle de basculement maximal α.

2. Elément formant siège selon la revendication 1,
**caractérisé en ce**
que des éléments de délimitation (18, 19, 20, 21, 28) sont prévus qui délimitent le mouvement de basculement maximal de la partie basculante (6) de la surface de siège (2).

3. Elément formant siège selon la revendication 2,
**caractérisé en ce**
que les éléments de délimitation (18, 19, 20, 21, 28) sont réalisés d'une manière élastique en vue d'une limitation amortie du mouvement de basculement maximal.

4. Elément formant siège selon l'une des revendications précédentes,
**caractérisé en ce**
que les valeurs des angles de basculement maximaux (α) dans la direction de basculement positive et négative sont de la même grandeur.

5. Elément formant siège selon l'une des revendications précédentes,
**caractérisé en ce**
que l'axe principal (13) s'étend essentiellement parallèlement à la partie basculante (6) de la surface de siège (2).

6. Elément formant siège selon l'une des revendications précédentes,
**caractérisé en ce**
que l'axe principal (13) s'étend essentiellement au milieu entre les bords latéraux (33) de la surface de siège (2).

7. Elément formant siège selon l'une des revendications précédentes,
**caractérisé en ce**
que la partie basculante (6) de la surface de siège (2) peut être basculée autour d'un axe additionnel (5) ou autour d'une pluralité d'axes (5, 13).

8. Elément formant siège selon la revendication 7,
**caractérisé en ce**
que l'axe additionnel (5) respectivement la pluralité d'axes (5, 13) se coupent avec l'axe principal (13) dans un point de rotation.

9. Elément de siège selon la revendication 8,
**caractérisé en ce**
que le point de rotation est disposé en dessous des tubérosités ischiatiques d'une personne utilisant l'élément formant siège.

10. Elément formant siège selon l'une des revendications 7 à 9,
**caractérisé en ce**
que le mouvement de basculement de la partie basculante (6) de la surface de siège (2) autour de l'axe additionnel respectivement autour de la pluralité d'axes (5) est limité à un angle de basculement maximal (β).

11. Elément formant siège selon l'une des revendications précédentes,
**caractérisé en ce**
que l'angle de basculement latéral maximal (α) est compris entre ± 0° et ± 15° et/ou
que l'angle de basculement maximal (β) vers l'avant est compris entre 0° et 30° et/ou
que l'angle de basculement maximal (ß) vers l'arrière est compris entre 0° et 15°.

12. Elément formant siège selon l'une des revendications précédentes,
**caractérisé en ce**
que l'axe principal (13) et/ou les axes additionnels (5, 13) sont disposés à une distance maximale de 8 cm de la surface de siège (2).

13. Elément formant siège selon l'une des revendications précédentes,
**caractérisé en ce**
qu'il est prévu à ou dans la surface de siège (2) un appui de sacrum (8') et/ou qu'il est prévu dans la surface de siège (2) une réception améliorée des tubérosités ischiatiques.

14. Elément formant siège selon la revendication 8,
**caractérisé en ce**
qu'il est prévu dans le point de rotation (5, 13) une articulation sphérique (26).

15. Elément formant siège selon l'une des revendications précédentes,
**caractérisé en ce**
qu'il est disposé entre la partie basculante (6) de la surface de siège (2) et l'unité de base (1) un segment sphérique (32) ou un segment ovale (32) sur lequel est logé d'une manière basculante la partie basculante (6) de la surface de siège (2).

16. Meuble formant siège, notamment siège de bureau, coussin de siège ou siège d'auto,
**caractérisé**
par les caractéristiques d'une ou de plusieurs des revendications précédentes.

17. Procédé pour commander un élément formant siège avec une unité de base (1) et une surface de siège (2) qui présente un bord avant (3) et un bord arrière (4), où au moins une partie (6) de la surface de siège (2) peut basculer par rapport à l'unité de base (1) autour d'au moins un axe principal (13) qui délimite le mouvement de basculement de la partie basculante (6) de la surface de siège (2) à un angle de basculement maximal α, l'angle de basculement maximal a représentant au plus ± 15° relativement à la position médiane de la partie basculante (6) de la surface de siège (2), la partie basculante (6) de la surface de siège (2) étant déplacée par une unité d'entraînement (30) selon un schéma de déplacement périodique prédéterminé, la durée de période du schéma de déplacement étant comprise entre 50 secondes et 5 minutes, et l'axe principal (13) s'étend du bord avant (3) au bord arrière (4) de la surface de siège (2) et est espacé de 10 cm au maximum de la surface de siège (2).

18. Procédé selon la revendication 17,
**caractérisé en ce**
que l'unité d'entraînement (30) est mise en ou hors service en fonction de la situation respective du trafic.

19. Procédé selon l'une des revendications 17 ou 18,
**caractérisé en ce**
que l'unité d'entraînement (29, 30) est reliée à un dispositif de commande (30) par lequel les schémas de déplacement de la partie basculante (6) de la surface de siège (2) sont mis en et hors service, où le dispositif de commande (30) est relié à des éléments de capteur (31), notamment à des capteurs d'accélération et où l'unité d'entraînement est mise en et/ou hors service en fonction des signaux fournis par les éléments de capteur (31).

20. Procédé selon l'une des revendications 17 à 19,
**caractérisé en ce**
que la partie basculante (6) de la surface de siège (2) est déplacée par un agencement mécanique et/ou hydraulique (29, 30), où l'agencement hydraulique comprend notamment trois éléments (29) actionnables hydrauliquement qui sont commandés par une unité de commande (30) pour faire basculer la partie basculante (6) de la surface de siège (2).
